(19) **Europäisches Patentamt / European Patent Office / Office européen des brevets**

(11) **EP 1 738 929 B1**

(12) **EUROPEAN PATENT SPECIFICATION**

(45) Date of publication and mention of the grant of the patent:
**13.08.2008 Bulletin 2008/33**

(51) Int Cl.:
**B60C 11/14** *(2006.01)*

(21) Application number: **06012185.2**

(22) Date of filing: **13.06.2006**

(54) **Rubber composition for tire and pneumatic tire comprising the same**

Gummizusammensetzung für Reifen und daraus bestehender Luftreifen

Composition de caoutchouc pour pneumatique et pneumatique comprenant ce caoutchouc

(84) Designated Contracting States:
**DE FR GB SE**

(30) Priority: **29.06.2005 JP 2005189900**

(43) Date of publication of application:
**03.01.2007 Bulletin 2007/01**

(73) Proprietor: **SUMITOMO RUBBER INDUSTRIES LIMITED**
**Kobe-shi,**
**Hyogo-ken (JP)**

(72) Inventors:
• **Minagoshi, Akira**
**Chuo-ku**
**Kobe-shi**
**Hyogo-ken (JP)**

• **Tanimura, Hiroshi**
**Chuo-ku,**
**Osaka-shi,**
**Osaka 540-6319 (JP)**

(74) Representative: **Manitz, Finsterwald & Partner GbR**
**Postfach 31 02 20**
**80102 München (DE)**

(56) References cited:
**CH-A5- 581 032**          **FR-A- 2 317 109**

EP 1 738 929 B1

**Description**

The present invention relates to a rubber composition for a tire and particularly relates to a rubber composition for a tire excellent in friction performance on ice and a pneumatic tire comprising the same.

Although spike tires have been used and chains have been loaded for running on snowy and icy road, environmental problems such as dust are caused; thus, studless tires were developed in place of these spike tires and chains as tires for running on a snowy and icy road surface.

Since a snowy and icy road surface is remarkably low in frictional coefficient and is slippery compared with a general road surface, devices in terms of materials and design are made on a studless tire. For example, a rubber composition compounding a diene rubber excellent in low temperature property is developed. Further, surface edge components are increased by changing the form of unevenness on the tire surface or an inorganic filler having scratching effect is compounded (JP-A-8-217918) etc to obtain the scratching effect to ice on the snowy and icy road surface, thereby, the studless tire has been designed so as to improve friction performance on ice.

However, friction performance on the snowy and icy road surface is still insufficient even by the above-mentioned studless tire compared with spike tires, and thus further improvement is required.

An object of the present invention is to provide a rubber composition for a tire improving friction performance on ice and a pneumatic tire comprising the same.

The present invention relates to a rubber composition for a tire comprising 0.5 to 20 parts by weight of a nonmetallic fiber having an average fiber diameter of 1 to 100 $\mu$m and an average fiber length of 0.1 to 5 mm, and 0.5 to 30 parts by weight of a filler having at least 2 projections and an average length of the projections of at least 10 $\mu$m based on 100 parts by weight of a diene rubber.

Further, in the rubber composition for a tire, it is preferable to satisfy the formula:

$$2X + Y \leq 30$$

when the amounts of the nonmetallic fiber and the filler are respectively referred to as X and Y.

Further, the pneumatic tire of the present invention comprises the rubber composition for a tire of the present invention.

Fig. 1 is a diagram showing the state of the nonmetallic fiber and the filler having at least 2 projections in the rubber composition for a tire of the present invention;

Fig. 2 is an illustration diagram of the angle X of a line which links the edge of projection with the center (inflection point) of the filler in the filler having at least 2 projections used for the present invention; and,

Fig. 3 is an illustration diagram of the length L of the projection in the filler having at least 2 of projections used for the present invention.

The rubber composition for a tire of the present invention comprises a rubber component, a nonmetallic fiber and a filler having at least 2 projections and an average length of the projections of at least 10 $\mu$m.

The rubber composition for a tire of the present invention contains a diene rubber as the rubber component.

As the diene rubber, an arbitrary diene rubber is used. Examples of the diene rubbers are a natural rubber (NR), an polyisoprene rubber (IR), various kinds of polybutadiene rubbers (BR), various kinds of styrene-butadiene copolymer rubbers (SBR), an acrylonitrile-butadiene copolymer rubber (NBR), a butyl rubber (IIR), a halogenated butyl rubber and a polychloroprene (CR), and these can be used alone or by blending at an arbitrary ratio. However, as the rubber component, NR and BR are preferably used from the viewpoint that the balance of low temperature property with processability, durability and the like is excellent.

The rubber composition for a tire of the present invention contains a nonmetallic fiber. Micro scratching effect to ice on the snowy and icy road surface is exerted by compounding the nonmetallic fiber.

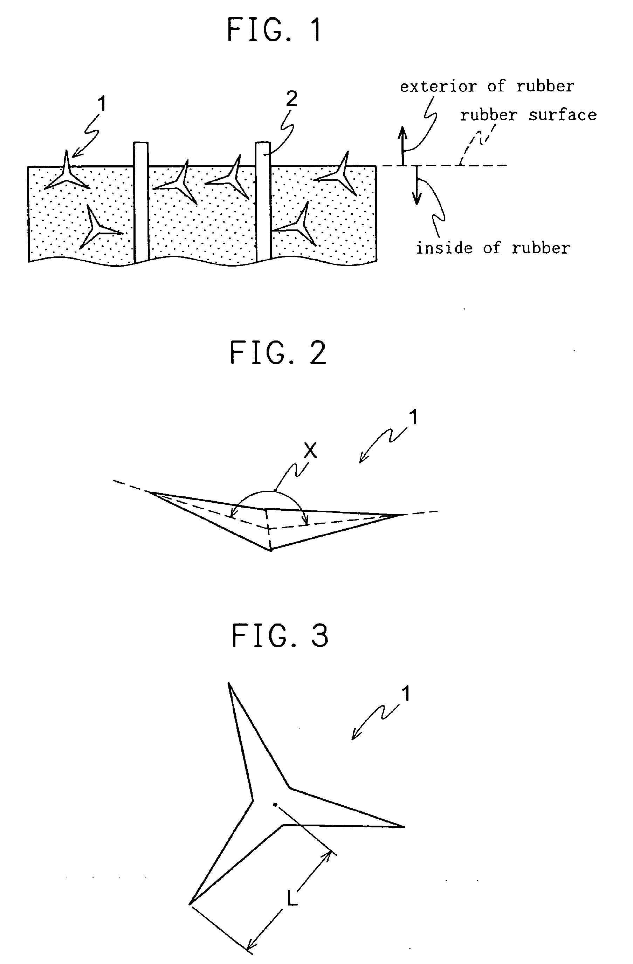

Since the nonmetallic fiber in the rubber extruded by a calender roll is usually oriented to an extrusion direction, in order to effectively express the scratching effect by the fiber to ice, it has been required to use a method of cutting a sheet vertical to an extrusion direction to be set up and a specific procedure (equipment) in which the fiber is oriented to a direction vertical to the extrusion direction by making an extrusion head as a tube, the sheet is cut in parallel to the extrusion direction, the cut products are respectively rotated by 90 degrees and overlapped again so as to be oriented to the direction of a tread thickness and the like, as a preparation process thereof. However, since it is disturbed that fibers are oriented to the extrusion direction of a rubber by compounding the nonmetallic fiber with the rubber together with the filler, the filler and the nonmetallic fiber can be arranged as shown in Fig. 1 and thereby the scratching effect to ice can be sufficiently obtained without using the specific procedure (equipment) in the production of tires.

The nonmetallic fiber has no risk of damaging a road surface, has a small difference in a frictional speed with a rubber, and is suitable for securing grounding between a tire and a snowy and icy road surface. Among nonmetallic fibers, a nonmetallic inorganic fiber is preferable. Further, glass fiber or carbon fiber which is broken at a suitable length and shortened in a process of kneading a rubber is preferable since it is easily dispersed and oriented and a rubber having a suitable complex elastic modulus is easily obtained.

The average fiber diameter of the nonmetallic fiber is at least 1 $\mu$m and preferably at most 3 $\mu$m. When the average fiber diameter is less than 1 $\mu$m, fibers oriented to a thickness direction cannot sufficiently make a part having a high ground pressure since the sectional area of the fiber is small. Further, the average fiber diameter is at most 100 $\mu$m, preferably at most 50 $\mu$m, and more preferably at most 40 $\mu$m. When the average fiber diameter is larger than 100 $\mu$m, adherence and adhesion friction do not act sufficiently since the action to push out a water film which is generated between the snowy and icy road surface and a tire is inferior.

The average fiber length of the nonmetallic fiber is at least 0.1 mm. When the average fiber length is less than 0.1 mm, fibers easily drop out from the rubber surface by running, and an effect of pushing out a water film is lowered. Further, the average fiber length is at most 5 mm, and preferably at most 3 mm. When the average fiber length is longer than 5 mm, the fibers are hardly dispersed and oriented and processability of the rubber is lowered.

An amount of the nonmetallic fiber is at least 0.5 part by weight based on 100 parts by weight of the diene rubber, and preferably at least 1 part by weight. When the amount of the nonmetallic fiber is less than 0.5 part by weight, an amount of the fiber forming a ground pressure on a rubber surface becomes small and the effect of removing a water film, and scratching ice is not sufficiently obtained. Further, the amount of the nonmetallic fiber is at most 20 parts by weight, preferably at most 18 parts by weight and more preferably at most 14 parts by weight. When the amount of the nonmetallic fiber exceeds 20 parts by weight, rigidity is too high and the rubber surface cannot follow the snowy and icy road surface; thus, adherence and adhesion friction are lowered.

The rubber composition for a tire of the present invention contains a filler having at least 2 projections and an average length of the projection of at least 10 $\mu$m. By compounding the filler having at least 2 projections, the at least 2 projections exhibit anchor effect, prevent from dropping out due to stimulation at running and abrasion, and produce micro projections from the rubber surface to exert the effect of removing a water film generated between the snowy and icy road surface and the tire and the scratching effect. Further, in the present invention, the filler shows excellent effects such as abrasion resistance, heat resistance, and thermal conductivity when it is compounded in the rubber component.

The number of the projections of the above-described filler is at least 2, and preferably at least 3. A filler having no projection or a filler having only one projection cannot show the anchor effect and the filler is easily dropped out due to stimulation and friction by tire running and the like.

Herein, the number of the projection of at least 2 is defined that the angle X of a line which links the edge of projection with the center (inflection point) of the filler is less than 180 degrees as shown in Fig. 2. The angle X is 180 degrees for the filler having only one projection and a linear filler such as fiber corresponds to this filler.

Further, the average length of the projections of the filler is at least 10 $\mu$m, preferably at least 50 $\mu$m, more preferably at least 75 $\mu$m, and further preferably at least 100 $\mu$m. When the average length of the projections of the filler is less than 10 $\mu$m, the scratching effect to ice on the snowy and icy road surface is not sufficiently obtained. Herein, the length of the projections is refereed to as L of Fig. 3.

Examples of the filler are zinc oxide whisker (for example, PANA-TETRA (tetrapod-shaped zinc oxide single crystal) available from Matsushita Electric Industrial Co., Ltd.) and star sands produced in Okinawa Prefecture. Among these, zinc oxide whisker is preferably used since it is a material harder than ice and softer than asphalt.

An amount of the filler is at least 0.5 part by weight based on 100 parts by weight of the diene rubber, preferably at least 1 part by weight and more preferably at least 5 parts by weight. When the amount of the filler is less than 0.5 part by weight, friction performance on ice on a snowy and icy road surface is not improved. Further, the amount of the filler is at most 30 parts by weight and preferably at most 20 parts by weight. When the amount of the filler exceeds 30 parts by weight, abrasion resistance is lowered.

Further, in order to improve the adhesive force between the filler and the diene rubber, the surface of the filler may be treated with a polypropylene (PP), polyethylene (PE), polystyrene (PS), polyurethane (PU), a polyvinyl alcohol (PVA), a silane coupling agent, a silylating agent and the like.

When the amounts of the nonmetallic fiber and the filler are respectively referred to as X and Y, it is preferable to satisfy the following formula.

$$2X + Y \leq 30$$

Thus, the friction performance on ice and abrasion resistance can be compatible by specifying the amounts. When (2X + Y) exceeds 30, abrasion resistance tends to be inferior. (2X + Y) is preferably at most 25.

In the rubber composition for a tire of the present invention, various compounding agents and additives such as other reinforcing agent (filler), a vulcanizing agent (crosslinking agent), a vulcanization accelerator, various oils, an antioxidant, a softening agent, a plasticizer and a coupling agent which are compounded for tires or for a general rubber composition can be compounded in addition to the diene rubber, the filler and the nonmetallic fiber. Further, the amounts of these compounding agents and additives also can be general amounts.

Examples of the reinforcing agent are silica and/or an inorganic filler represented by the general formula (1):

$$mM \cdot xSiO_y \cdot zH_2O \qquad\qquad (1)$$

(wherein M is at least one kind selected from a metal, an oxide and a hydroxide of the metal and a hydrate thereof, and a carbonate of the metal selected from the group consisting of aluminum, magnesium, titanium, calcium and zirconium, and m, x, y and z are constant numbers).

An amount of the inorganic filler is preferably at most 150 parts by weight based on 100 parts by weight of the diene rubber, and more preferably at most 100 parts by weight. When the amount of the inorganic filler exceeds 150 parts by weight, processability tends to be deteriorated. Further, the amount of the inorganic filler is preferably at least 5 parts by weight.

When silica is compounded, a silane coupling agent is preferably used in combination. An amount of the silane coupling agent is preferably at least 1 part by weight based on 100 parts by weight of the silica, and more preferably at least 2 parts by weight. When the amount of the silane coupling agent is less than 1 part by weight, viscosity of the unvulcanized rubber composition tends to be high. Further, the amount of the silane coupling agent is preferably at most 20 parts by weight based on 100 parts by weight of the silica, and more preferably at most 15 parts by weight. When the amount of the silane coupling agent exceeds 20 parts by weight, an effect of compounding the silane coupling agent is small regardless of the compounding amount, and cost thereof tends to be high.

Further, an example of the reinforcing agent is carbon black. The amount of carbon black is preferably at least 5 parts by weight based on 100 parts by weight of the diene rubber, and more preferably at least 10 parts by weight. When the amount of carbon black is less than 5 parts by weight, sufficient reinforcing effect is not obtained and abrasion resistance tends to be inferior. The amount of carbon black is preferably at most 150 parts by weight, and more preferably at most 100 parts by weight. When the amount of carbon black exceeds 150 parts by weight, processability is deteriorated and hardness becomes high; therefore, friction performance on ice tends to be lowered.

When oil is compounded, an amount of the oil is preferably at least 5 parts by weight based on 100 parts by weight of the diene rubber and more preferably at least 10 parts by weight. When the amount of the oil is less than 5 parts by weight, hardness does not become low and friction performance on ice tends to be lowered. Further, the amount of the oil is preferably at most 150 parts by weight and more preferably at most 100 parts by weight. When the amount of the oil exceeds 150 parts by weight, abrasion resistance tends to be lowered.

An example of the vulcanizing agent is sulfur. An amount of sulfur is preferably at least 0.2 part by weight based on 100 parts by weight of the diene rubber, and more preferably at least 0.5 part by weight. When the amount of sulfur is less than 0.2 part by weight, crosslinking density is low and strength does not tend to be obtained. Further, the amount of sulfur is preferably at most 10 parts by weight, and more preferably at most 4 parts by weight. When the amount of sulfur exceeds 10 parts by weight, hardness becomes high in accordance with the rise in crosslinking density, thereby, friction performance on ice tends to be lowered.

When the vulcanization accelerator is compounded, an amount of the vulcanization accelerator is preferably at least 0.1 part by weight based on 100 parts by weight of the diene rubber, and more preferably at least 1 part by weight. When the amount of the vulcanization accelerator is less than 0.1 part by weight, the vulcanization speed is slow and productivity tends to be lowered. Further, the amount of the vulcanizing accelerator is preferably at most 10 parts by weight, and more preferably at most 5 parts by weight. When the amount of the vulcanization accelerator exceeds 10 parts by weight, rubber scorch is caused and physical properties tend to be lowered.

The rubber composition for a tire of the present invention is preferably used particularly for a tread rubber of a pneumatic tire since the frictional coefficient on a snowy and icy road surface is improved by the scratching effect and the effect of removing water due to compounding the filler and the nonmetallic fiber.

As a process for forming a tread, an extrusion process by a usual calender roll can be used, but as described in JP-A-2001-39104, it is preferable to orient the nonmetallic fiber to the direction of a tread thickness by a process such that the rubber composition, in which the fiber is dispersed, is processed with rolling by a calender roll and the obtained rubber sheet is folded.

The pneumatic tire of the present invention is prepared by a usual process using the rubber composition for a tire of the present invention. Namely, the rubber composition for a tire of the present invention compounding the above-described additives according to the necessity is extrusion-processed by adjusting a shape of each tire part at an unvulcanized stage and is molded on a tire molding machine to form an unvulcanized tire. The pneumatic tire is obtained by pressurizing the unvulcanized tire with heating in a vulcanizer.

The pneumatic tire of the present invention is preferably a studless tire in particular.

EXAMPLES

The present invention is explained in detail based on Examples but the present invention is not limited thereto.

Raw materials used in Examples and Comparative Examples are collectively shown below in the following.

Natural rubber: RSS#3 available from Tech Bee Hung Co., Ltd.

Polybutadiene rubber: UBEPOL-BR150B available from Ube Industries, Ltd.

Carbon black: SHOWA BLACK N220 available from Showa Cabot K. K.

Silica: ULTRASIL VN3 available from Degussa Japan Corporation.

Silane coupling Agent: Si69 (bis(3-triethoxysilylpropyl)tetrasulfide) available from Degussa Japan Corporation.

Antioxidant: NOCRAC 6C (N-1,3-dimethylbutyl-N'-phenyl-p-phenylenediamine) available from Ouchi Shinko Chemical Industrial CO., LTD.

Wax: SUNNOC WAX available from Ouchi Shinko Chemical Industrial CO., LTD.

Oil: DIANAPROCESS OIL PS323 available from Idemitsu Kosan Co., Ltd. Stearic acid: STEARIC ACID available from NOF Corporation.

Zinc flower: ZINC FLOWER No.1 available from Mitsui Mining & Smelting Co., Ltd.

Glass fiber: Micro Chopped Strand (average fiber diameter: 11 μm and cut length (average fiber length): 3 mm) available from NSG VETROTEX Inc.

Zinc oxide whisker 1: PANA-TETRA A (number of projections: 4 and average length of projections: 10 μm) available from Matsushita Electronic Industrial Co., Ltd.

Zinc oxide whisker 2: PANA-TETRA B (number of projections: 4 and average length of projections: 100 μm) available from Matsushita Electronic Industrial Co., Ltd.

Sulfur: Sulfur powder available from Tsurumi Chemical Industry Co., Ltd.

Vulcanization accelerator: NOCCELER CZ (N-cyclohexyl-2-benzothiazolylsulfenamide) available from Ouchi Shinko Chemical Industrial CO., LTD.

EXAMPLES 1 to 3 and COMPARATIVE EXAMPLES 1 to 5

The compounding components shown in Table 1 except for sulfur and a vulcanization accelerator were kneaded for 3 to 5 minutes using an enclosed type Banbury mixer having a 1.7-liter capacity, and at the time when a temperature reached at least 150°C, the compounded rubber was discharged to prepare a base kneaded rubber. A rubber composition was obtained by kneading the base kneaded rubber, sulfur and a vulcanization accelerator with an open roll and vulcanizing the mixture.

A tread was formed by extruding the obtained rubber composition in the shape of a tread with a calender roll by a process usually used and a tire having a size of 195/65R15 was prepared. The following tests were conducted on the obtained tire. The results are shown in Table 1.

<Friction performance on ice>

The tires were mounted on a domestically produced FR vehicle of 2,000 cc displacement and a braking distance on ice board from a speed of 30 km/hr was measured and the reciprocal numbers thereof were calculated. The reciprocal number of the braking distance in Comparative Example 1 was referred to as 100 and the other reciprocal numbers were shown by indices to be the friction performance on ice. The larger the index is, the more excellent the friction performance on ice is.

(Abrasion resistance)

Rubber test pieces having a thickness of 3 mm were cut out from the above-described tire and the abrasion amount was measured at a surface rotational speed of 50 m/min, a load of 3.0 kg, and a slip ratio of 20 % at an amount of dropping sand of 15 g/min by using a Lambourn abrasion tester manufactured by Iwamoto Seisakusyo K., K. The abrasion amount was shown by an index, referring the reciprocal number of the abrasion amount in Comparative Example 1 as to 100. It is indicated that the larger the index is, the more excellent the abrasion resistance is.

TABLE 1

| | Ex. | | | Com. Ex. | | | | |
|---|---|---|---|---|---|---|---|---|
| | 1 | 2 | 3 | 1 | 2 | 3 | 4 | 5 |
| Amounts (parts by weight) | | | | | | | | |
| Natural rubber | 60 | 60 | 60 | 60 | 60 | 60 | 60 | 60 |
| Polybutadiene rubber | 40 | 40 | 40 | 40 | 40 | 40 | 40 | 40 |
| Carbon black | 30 | 30 | 30 | 30 | 30 | 30 | 30 | 30 |
| Silica | 20 | 20 | 20 | 20 | 20 | 20 | 20 | 20 |
| Silane coupling agent | 2 | 2 | 2 | 2 | 2 | 2 | 2 | 2 |
| Oil | 20 | 20 | 20 | 20 | 20 | 20 | 20 | 20 |
| Wax | 2 | 2 | 2 | 2 | 2 | 2 | 2 | 2 |
| Antioxidant | 2 | 2 | 2 | 2 | 2 | 2 | 2 | 2 |
| Stearic acid | 2 | 2 | 2 | 2 | 2 | 2 | 2 | 2 |
| Zinc flower | 3 | 3 | 3 | 3 | 3 | 3 | 3 | 3 |
| Glass fiber (X) | 10 | 10 | 5 | - | 10 | - | - | 15 |
| Zinc oxide whisker 1 (Y) | 10 | - | - | - | - | 10 | - | - |
| Zinc oxide whisker 2 (Y) | - | 10 | 10 | - | - | - | 10 | 15 |
| Sulfur | 1.5 | 1.5 | 1.5 | 1.5 | 1.5 | 1.5 | 1.5 | 1.5 |
| Vulcanization accelerator | 1.5 | 1.5 | 1.5 | 1.5 | 1.5 | 1.5 | 1.5 | 1.5 |
| 2(X)+(Y) | 30 | 30 | 20 | 0 | 20 | 10 | 10 | 45 |
| Evaluation results | | | | | | | | |
| Friction performance on ice | 134 | 150 | 140 | 100 | 110 | 108 | 125 | 152 |
| Abrasion resistance | 88 | 85 | 88 | 100 | 95 | 97 | 94 | 78 |

According to the present invention, there can be obtained a studless tire having excellent friction performance on ice by an effect of eliminating a water film generated between an tire and a snowy and icy road surface and scratching effect on the snowy and icy road surface by compounding the nonmetallic fiber having a specific fiber diameter and fiber length and a filler having at least 2 projections and an average length of the projection of at least 10 $\mu$m with a diene rubber.

## Claims

1. A rubber composition for a tire comprising 0.5 to 20 parts by weight of a nonmetallic fiber (2) having an average fiber diameter of 1 to 100 $\mu$m and an average fiber length of 0.1 to 5 mm, and 0.5 to 30 parts by weight of a filler (1) having at least 2 projections and an average length of the projections of at least 10 $\mu$m based on 100 parts by weight of a diene rubber.

2. The rubber composition for a tire of Claim 1, wherein the formula:

$$2X + Y \le 30$$

is satisfied when the amounts of the nonmetallic fiber and the filler are respectively referred to as X and Y.

3. A pneumatic tire comprising the rubber composition for a tire of Claims 1 and 2.

## Patentansprüche

1. Kautschukzusammensetzung für einen Reifen enthaltend 0,5 bis 20 Gewichtsteile einer nicht metallischen Faser (2) mit einem durchschnittlichen Faserdurchmesser von 1 bis 100 $\mu$m und mit einer durchschnittlichen Faserlänge von 0,1 bis 55 mm sowie 0,5 bis 30 Gewichtsteile eines Füllstoffs (1) mit wenigstens 2 Vorsprüngen und mit einer durchschnittlichen Länge der Vorsprünge von wenigstens 10 μm bezogen auf 100 Gewichtsteile eines Dienkautschuks.

**2.** Kautschukzusammensetzung für einen Reifen nach Anspruch 1, wobei diese die Formel:

$$2X + Y \leq 30$$

erfüllt, wenn die Mengen der nicht metallischen Faser und des Füllstoffes als X bzw. Y bezeichnet werden.

**3.** Luftreifen enthaltend eine Kautschukzusammensetzung für einen Reifen nach Anspruch 1 oder 2.

**Revendications**

**1.** Composition de caoutchouc pour un pneu comprenant de 0,5 à 20 parties en poids d'une fibre non métallique (2) ayant un diamètre de fibre moyen de 1 à 100 μm et une longueur de fibre moyenne de 0,1 à 5 mm, et de 0,5 à 30 parties en poids d'une charge (1) ayant au moins 2 projections et une longueur moyenne des projections d'au moins 10 μm par rapport à 100 parties en poids d'un caoutchouc diène.

**2.** Composition de caoutchouc pour un pneu selon la revendication 1, dans laquelle la formule :

$$2X + Y \leq 30$$

est satisfaite lorsque les quantités de la fibre non métallique et de la charge sont respectivement X et Y.

**3.** Pneumatique comprenant la composition de caoutchouc pour un pneu selon les revendications 1 et 2.

# FIG. 1

exterior of rubber

rubber surface

inside of rubber

# FIG. 2

X

1

# FIG. 3

1

L

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8217918 A
- JP 2001039104 A